# EUROPÄISCHE PATENTANMELDUNG

(11) **EP 3 991 574 A1**
(43) Veröffentlichungstag der Anmeldung: **04.05.2022**
(21) Anmeldenummer: 21205878.8
(22) Anmeldetag: 02.11.2021
(51) Int. Cl.: A23N 17/00, B07B 1/20

(54) **VORRICHTUNG UND VERFAHREN ZUR ENTSTAUBUNG VON RAUFUTTER**

(30) Priorität: 03.11.2020 AT 509462020
(71) Anmelder: Schauer Agrotronic GmbH, 4731 Prambachkirchen (AT)
(72) Erfinder: LESSLHUMER, Erwin, 4731 Prambachkirchen (AT)
(74) Vertreter: Burger, Hannes

(57) **Zusammenfassung**

Die Erfindung betrifft eine Vorrichtung (1) und ein Verfahren zum Trennen von Raufutter (2) von dem darin mit enthaltenen Staub (3). Die Vorrichtung (1) umfasst ein rohrförmig oder trogförmig ausgebildetes Gehäuse (4), ein Separierelement (5), einen Fördermechanismus (6) und eine Ableitungsanordnung (7). Das Separierelement (5) ist in einem Hohlraum (11) des Gehäuses (4) aufgenommen und weist eine Vielzahl von über die Oberfläche verteilt angeordnete Durchbrüche (12) auf. Die Ableitungsanordnung (7) weist einen zwischen dem Separierelement (5) und einer Innenfläche (10) des Gehäuses (4) befindlichen Aufnahmeraum (13) auf. Das Raufutter (2) wird mittels des Fördermechanismus (6) entlang des Separierelements (5) entlanggefördert, wobei dabei das Abtrennen des Staubs (3) vom Raufutter (2) durch die im Separierelement (5) befindlichen Durchbrüche (12) hindurch in den Aufnahmeraum (13) durchgeführt wird.

## Beschreibung

Die Erfindung betrifft eine Vorrichtung und ein Verfahren zum Trennen von Raufutter von dem darin befindlichen Staub.

Bei der Tierhaltung kommt es bei der Bereitstellung des Raufutters für Fütterungszwecke und/oder Einstreuzwecke zu vermehrter Staubentwicklung. Das landwirtschaftlich tätige Personal und auch die Tiere sind täglich mehrmals diesen Staubbelastungen ausgesetzt. Dies führt sowohl beim landwirtschaftlich tätigen Personal als auch bei den Tieren zu erhöhten Belastungen bis hin zu gesundheitlichen Schäden. Dies stellt insbesondere für die Atemwege ein gesundheitliches Risiko dar.

Aufgabe der vorliegenden Erfindung war es, diese Nachteile zu überwinden und eine Vorrichtung und ein Verfahren zur Verfügung zu stellen, mittels derer ein Benutzer der Vorrichtung die Tierbetreuung bei verringerten Staubbelastungen durchführen kann und damit das Gesundheitsrisiko sowohl für Mensch und Tier gesenkt werden kann.

Diese Aufgabe wird durch eine Vorrichtung und ein Verfahren gemäß den Ansprüchen gelöst.

Die Vorrichtung dient zum Entstauben und somit dem Trennen von Raufutter und dem darin befindlichen Staub. Damit wird vor der Abgabe des Raufutters die Abtrennung oder Abscheidung des darin enthaltenen oder anhaftenden Staubs durchführbar oder durchgeführt. Die Vorrichtung umfasst
- ein rohrförmig oder trogförmig ausgebildetes Gehäuse, welches Gehäuse einen ersten Endbereich und in Richtung seiner Längserstreckung davon beabstandet einen zweiten Endbereich aufweist und mit seiner Innenfläche einen sich zwischen den beiden Endbereichen erstreckenden Hohlraum definiert,
- ein Separierelement, welches Separierelement im Hohlraum aufgenommen ist und in seiner Längserstreckung eine Vielzahl an über die Oberfläche verteilt angeordnete Durchbrüche aufweist, und das Separierelement sich zumindest zwischen den beiden Endbereichen des Gehäuses erstreckt,
- einen Fördermechanismus, welcher Fördermechanismus ebenfalls im Hohlraum aufgenommen ist und dazu ausgebildet ist, das zu entstaubende Raufutter samt dem darin befindlichen Staub entlang des Separierelements zumindest vom ersten Endbereich hin zum zweiten Endbereich zu fördern, und
- eine Ableitungsanordnung, welche Ableitungsanordnung einen zwischen dem Separierelement und der Innenfläche des Gehäuses ausgebildeten Aufnahmeraum und zumindest eine aus dem Aufnahmeraum hinausführende Staubableitung aufweist.

Der dadurch erzielte Vorteil liegt darin, dass so nach dem Durchtritt des Raufutters durch die Vorrichtung eine ausreichende räumliche Abtrennung und/oder Abscheidung des im Raufutter mit enthaltenden Staubs erfolgt ist. Dies wird mittels des Fördermechanismus sehr schonend und ohne hohe zusätzliche Staubentwicklung durchgeführt. Das Abtrennen oder Abscheiden des Staubs aus dem Fördergut, nämlich dem Raufutter, erfolgt während des Entlangförderns durch die Vielzahl der im Separierelement befindlichen Durchbrüche hindurch in den außerhalb des Förderraums befindlichen und von der Ableitungsanordnung im Zusammenwirken zwischen dem Separierelement und dem Gehäuse definierten Aufnahmeraum. Während des zumeist stetigen Entlangförderns mittels des Fördermechanismus erfolgt das Entstauben und damit die Abtrennung des Staubs vom Raufutter. Nach dem Durchtritt steht somit das zu einem überwiegenden Anteil entstaubte Raufutter für die Tierhaltung zur Verfügung. Beim Verteilen oder Bereitstellen des Tierfutters und/oder der Streu wird das Aufwirbeln und Verteilen des Staubs zu einem überwiegenden Anteil bis nahezu verhindert. Der abgetrennte Staub wird gesondert vom Raufutter entfernt und stellt damit keine direkte Staubbelastung mehr dar.

Weiters kann es vorteilhaft sein, wenn der zwischen der Innenfläche des Gehäuses und dem Separierelement befindliche Aufnahmeraum gegenüber der äußeren Umgebung abgeschlossen ist, insbesondere abgedichtet ausgebildet ist. Damit kann ein ungewolltes Austreten des abgetrennten Staubs sowie die Staubentwicklung während des Trennvorgangs noch weiter minimiert und herabgesetzt werden.

Eine andere Ausführungsform zeichnet sich dadurch aus, dass das Separierelement durch ein Sieb, ein Lochblech, ein Gitter, ein Maschengeflecht gebildet ist. Damit kann je nach zu entstaubendem Raufutter die Ausbildung des Separierelements an die unterschiedlichen Anforderungen oder Einsatzbedingungen einfach angepasst werden. Durch die Wahl des jeweiligen Bauteils zur Bildung des Separierelements kann so die Größe und damit verbunden das Ausmaß des Flächeninhalts der Durchtrittsöffnungen bezüglich der Gesamtfläche des Separierelements an die unterschiedlichsten Einsatzbedingungen und zu entstaubenden Stoffe angepasst werden.

Eine weitere mögliche Ausführungsform hat die Merkmale, dass das Separierelement rohrförmig oder trogförmig ausgebildet ist. Damit kann eine über den Umfang gesehen durchgängige Einhüllung und Führung des Raufutters während seiner Förderbewegung erzielt werden.

Eine weitere Ausbildung sieht vor, dass das rohrförmig oder trogförmig ausgebildete Separierelement von der Innenfläche des Gehäuses in radialer Richtung beabstandet, insbesondere umfänglich durchgängig radial beabstandet, angeordnet ist. Wird das Separierelement über seinen gesamten Umfang vom Gehäuse distanziert angeordnet, kann so ein vollständig umfänglich ausgebildeter Aufnahmeraum um das Separierelement herum geschaffen werden. So kann der Entstaubungsgrad noch zusätzlich verbessert werden.

Eine andere Ausführungsform zeichnet sich dadurch aus, dass eine Aufgabeeinheit für das zu entstaubende Raufutter vorgesehen ist, welche Aufgabeeinheit im Bereich des ersten Endbereichs oder entlang eines Abschnitts des Gehäuses, insbesondere entlang des gesamten Gehäuses, angeordnet ist. Damit kann das zu entstaubende Raufutter an einer vordefinierten Aufgabestelle der Entstaubungsvorrichtung zugeführt werden.

Eine weitere bevorzugte Ausführungsform ist dadurch gekennzeichnet, dass die Aufgabeeinheit anschließend an der vom zweiten Endbereich abgewendeten Seite des Gehäuses angeordnet ist. Damit kann eine bessere und längere Behandlungsstrecke geschaffen werden. Darüber hinaus kann so eine exaktere räumliche Trennung zwischen Entstaubung und Zuführung erzielt werden.

Weiters kann es vorteilhaft sein, wenn die Aufgabeeinheit einen Aufgabetrichter und ein an das Separierelement daran anschließendes Verbindungselement umfasst. So kann eine noch gerichtetere Zufuhr des zu entstaubenden Raufutters ermöglicht werden.

Eine andere alternative Ausführungsform zeichnet sich dadurch aus, dass sich der Fördermechanismus in das Verbindungselement der Aufgabeeinheit hinein erstreckt. Damit kann eine bessere Auftrennung und Auflockerung des zu entstaubenden Raufutters erzielt werden.

Eine weitere mögliche und gegebenenfalls alternative Ausführungsform hat die Merkmale, dass der Fördermechanismus durch eine Förderschnecke, eine Förderkette, ein Förderband, Förderseil oder ähnliches gebildet ist. So kann je nach Art und Konsistenz des Raufutters der dafür geeignetste Fördermechanismus ausgewählt und eingesetzt werden.

Eine weitere Ausbildung sieht vor, dass die Ableitungsanordnung eine Absaugvorrichtung umfasst, welche Absaugvorrichtung dazu ausgebildet ist, den im Aufnahmeraum befindlichen Staub via die Staubableitung abzusaugen. Damit kann eine noch bessere und intensivere Entstaubung durchgeführt werden. Darüber hinaus können so übermäßige Ablagerungen und damit mögliche Verstopfungen vermieden werden.

Eine andere Ausführungsform zeichnet sich dadurch aus, dass das Gehäuse ausgehend von seinem ersten Endbereich hin zu seinem zweiten Endbereich ansteigend angeordnet ist. So kann eine mittels Schwerkraft wirkende Trennung und Ableitung des Staubs erzielt werden.

Eine weitere bevorzugte Ausführungsform ist dadurch gekennzeichnet, dass die aus dem Aufnahmeraum hinausführende Staubableitung im ersten Endbereich des Gehäuses angeordnet ist. Damit kann in jenem Bereich der Vorrichtung, welcher bodennäher angeordnet ist, die gezielte Ableitung des abgetrennten Staubs durchgeführt werden.

Eine weitere mögliche und gegebenenfalls alternative Ausführungsform hat die Merkmale, dass das Gehäuse ausgehend von seinem ersten Endbereich hin zu seinem zweiten Endbereich eine horizontale Ausrichtung aufweist. Damit kann ebenfalls eine einfache und sichere Abtrennung des Staubs vom Raufutter durchgeführt werden.

Eine weitere Ausbildung sieht vor, dass die aus dem Aufnahmeraum hinausführende Staubableitung in einem Mittelabschnitt zwischen dem ersten Endbereich und dem zweiten Endbereich des Gehäuses angeordnet ist. Damit kann insbesondere in Verbindung oder Kombination mit der Absaugvorrichtung eine zentral gelegene Ableitungsstelle aus dem Gehäuse geschaffen werden.

Die Aufgabe der Erfindung wird aber unabhängig davon auch durch ein Verfahren zum Trennen von Raufutter von dem darin mit enthaltenen Staub und damit verbundenen Entstauben gelöst, bei welchem folgende Schritte durchgeführt werden
- Bereitstellen eines rohrförmig oder trogförmig ausgebildeten Gehäuses, welches Gehäuse einen ersten Endbereich und in Richtung seiner Längserstreckung davon beabstandet einen zweiten Endbereich aufweist und von seiner Innenfläche ein sich zwischen den beiden Endbereichen erstreckenden Hohlraum definiert wird,
- Bereitstellen eines Separierelements, welches Separierelement im Hohlraum aufgenommen ist und in seiner Längserstreckung eine Vielzahl an über die Oberfläche verteilt angeordnete Durchbrüche aufweist, und das Separierelement sich zumindest zwischen den beiden Endbereichen des Gehäuses erstreckt,
- Bereitstellen eines Fördermechanismus, welcher Fördermechanismus ebenfalls im Hohlraum aufgenommen ist,
- Bereitstellen einer Ableitungsanordnung, wobei von der Ableitungsanordnung ein zwischen dem Separierelement und der Innenfläche des Gehäuses ausgebildeter Aufnahmeraum und zumindest eine aus dem Aufnahmeraum hinausführende Staubableitung gebildet wird, und
- Zuführen des zu entstaubenden Raufutters in den vom Gehäuse definierten Hohlraum und Entlangfördern des Raufutters entlang des Separierelements zumindest vom ersten Endbereich hin zum zweiten Endbereich mittels des Fördermechanismus und dabei Abtrennen des Staubs vom Raufutter durch die im Separierelement befindlichen Durchbrüche hindurch in den Aufnahmeraum.

Vorteilhaft ist bei den hier gewählten Verfahrensschritten, dass so nach dem Durchtritt des Raufutters durch die Vorrichtung eine ausreichende räumliche Abtrennung und/oder Abscheidung des im Raufutter mit enthaltenden Staubs erfolgt ist. Dies wird mittels des Fördermechanismus sehr schonend und ohne hohe zusätzliche Staubentwicklung durchgeführt. Das Abtrennen oder Abscheiden des Staubs aus dem Fördergut, nämlich dem Raufutter, erfolgt während des Entlangförderns durch die Vielzahl der im Separierelement befindlichen Durchbrüche hindurch in den außerhalb des Förderraums befindlichen und von der Ableitungsanordnung im Zusammenwirken zwischen dem Separierelement und dem Gehäuse definierten Aufnahmeraum. Während des zumeist stetigen Entlangförderns mittels des Fördermechanismus erfolgt das Entstauben und damit die Abtrennung des Staubs vom Raufutter. Nach dem Durchtritt steht somit das zu einem überwiegenden Anteil entstaubte Raufutter für die Tierhaltung zur Verfügung. Beim Verteilen oder Bereitstellen des Tierfutters und/oder der Streu wird das Aufwirbeln und Verteilen des Staubs zu einem überwiegenden Anteil bis nahezu verhindert. Der abgetrennte Staub wird gesondert vom Raufutter entfernt und stellt damit keine direkte Staubbelastung mehr dar.

Weiters ist ein Vorgehen vorteilhaft, bei dem mittels einer Absaugvorrichtung der im Aufnahmeraum befindliche Staub abgesaugt wird. Damit kann eine noch bessere und intensivere Entstaubung durchgeführt werden. Darüber hinaus können so übermäßige Ablagerungen und damit mögliche Verstopfungen vermieden werden.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Vorrichtung zum Trennen von Raufutter von dem darin befindlichen Staub, in Seitenansicht geschnitten;
- Fig. 2: die Vorrichtung nach Fig. 1 im Querschnitt gemäß den Linien II - II;
- Fig. 3: ein zweites Ausführungsbeispiel einer Vorrichtung zum Trennen von Raufutter von dem darin befindlichen Staub, in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf, "aufweisend", "schließt ein", "einschließlich", "enthält", "enthaltend" und jegliche Variationen dieser eine nicht ausschließliche Einbeziehung abdecken.

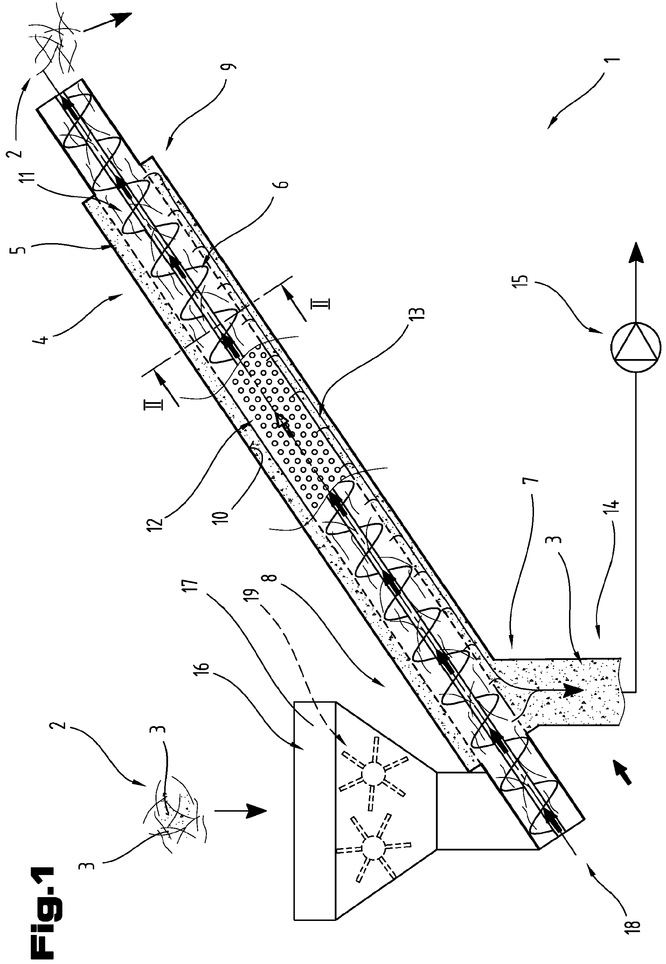

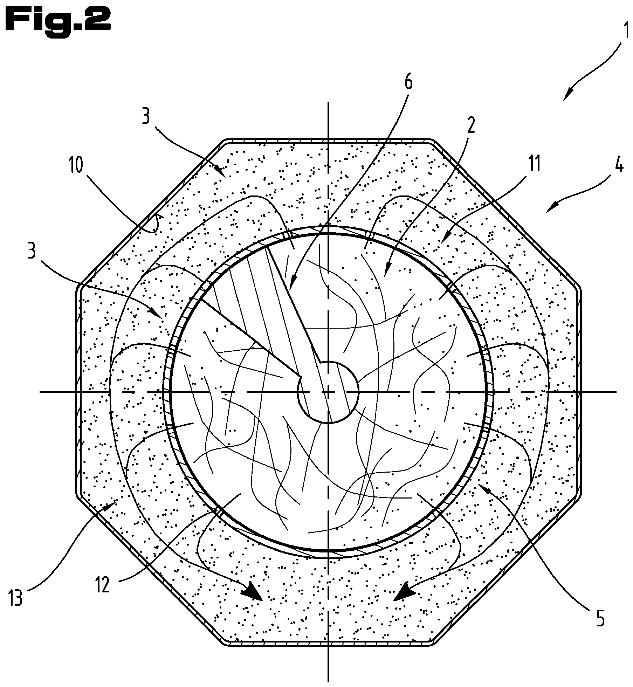

In den Fig. 1 und 2 ist ein erstes mögliches Ausführungsbeispiel einer Vorrichtung 1 zum Entstauben von Raufutter 2 gezeigt, welche auch als Entstaubungsvorrichtung oder Entstaubungsanlage bezeichnet werden kann.

Zu Raufutter 2 gehören unter anderem Heu und Stroh, Gras, Grassilage, Maissilage und andere Ganzpflanzenprodukte mit hohem Strukturgehalt. Insbesondere fällt darunter getrocknetes Raufutter 2 mit einem geringen Feuchtigkeitsanteil. Bei Heu und Stroh ist neben den länglichen Faserstoffen auch noch ein gewisser Staubanteil mit enthalten. Gemäß der vorliegenden Erfindung wird insbesondere vor der Abgabe des Raufutters 2 in den Stall mit den dort befindlichen Tieren der Staub 3 vom Raufutter 2 abgetrennt oder abgeschieden. Bei gewissen Tieren ist deren Stallplatz oder Standplatz mit Streu zu belegen, wobei dies zumeist Stroh oder auch Laub oder dergleichen sein kann. Dies wird ebenfalls unter dem Überbegriff Raufutter 2 verstanden. Das zu behandelnde und in der Vorrichtung 1 zu fördernde Gut stellt somit ein Gemisch aus dem Raufutter 2 samt dem darin befindlichen Staub 3 dar. Es gilt den Staub 3 von dem zur Abgabe an die Tiere vorgesehenen Raufutter 2 räumlich voneinander zu trennen, sodass das Personal und die Tiere so gut wie nicht mit dem Staub 3 in Kontakt kommen.

Die Vorrichtung 1 bzw. die Entstaubungsanlage umfasst mehrere Bauteilkomponenten, welche nachfolgend beschrieben werden. So umfasst die Vorrichtung 1 ein rohrförmig oder trogförmig ausgebildetes Gehäuse 4, ein Separierelement 5, einen Fördermechanismus 6 und eine Ableitungsanordnung 7.

Das Gehäuse 4 ist bevorzugt rohrförmig oder trogförmig ausgebildet und kann die unterschiedlichsten Querschnittsformen aufweisen. So kann der Querschnitt z.B. rund, oval oder aber auch mehreckig ausgebildet sein. Als mehreckige Querschnitte können z.B. ein Dreieck, Viereck, Sechseck oder Achteck gewählt werden.

In Richtung seiner Längserstreckung weist das Gehäuse 4 seinerseits einen ersten Endbereich 8 und einen davon beabstandeten zweiten Endbereich 9 auf. Weiters weist die Gehäusewandung eine Innenfläche 10 auf und definiert zwischen den beiden Endbereichen 8, 9 einen sich dazwischen erstreckenden Hohlraum 11.

Das Separierelement 5 ist seinerseits im Hohlraum 11 aufgenommen und weist in seiner Längserstreckung eine Vielzahl an über die Oberfläche verteilt angeordnete Durchbrüche 12 auf. Somit durchsetzen die einzelnen Durchbrüche 12 das Separierelement 5 jeweils zwischen den beiden Oberflächen bzw. Flachseiten. Bevorzugt erstreckt sich das Separierelement 5 zwischen den beiden voneinander beabstandeten Endbereichen 8, 9 durchgängig. Weiters kann das Separierelement 5 durch ein Sieb, ein Lochblech, ein Gitter, ein Maschengeflecht oder dergleichen gebildet sein. Zumeist handelt es sich um einen flächenhaften Bauteil, welcher je nach Ausbildung auch verformt oder umgeformt ausgebildet sein kann. Der besseren Übersichtlichkeit halber wurde in einem Teilabschnitt des Gehäuses 4 das Separierelement 5 mit den über die Oberfläche verteilt angeordneten Durchbrüchen 12 ohne dem innerhalb desselben befindlichen Fördermechanismus 6 dargestellt.

Bei diesem Ausführungsbeispiel ist das Separierelement 5 rohrförmig oder trogförmig ausgebildet. Die Querschnittsform des Separierelements 5 wird in Abhängigkeit vom gewählten oder eingesetzten Fördermechanismus 6 gewählt. Hier wurde ein kreisrunder Querschnitt gewählt, wobei auch davon abweichende Querschnittsformen möglich sind. Bei der rohrförmigen oder trogförmigen Ausbildung des Separierelements 5 kann dieses von der Innenfläche 10 des Gehäuses 4 in radialer Richtung beabstandet angeordnet sein. Bevorzugt erfolgt eine umfänglich durchgängig radial Beabstandung.

Mittels des Fördermechanismus 6, welcher auf alle Fälle zumindest innerhalb des Hohlraums 11 befindlich ist bzw. in diesem aufgenommen ist, wird bei in Betrieb befindlicher Vorrichtung 1 das zu fördernde Gut, nämlich das zu entstaubende Raufutter 2, entlang des Separierelements 5 zumindest ausgehend vom ersten Endbereich 8 hin zum zweiten Endbereich 9 gefördert. Der Fördermechanismus 6 kann z.B. durch eine Förderschnecke, eine Förderkette, ein Förderband, insbesondere mit Durchtrittsöffnungen, oder dergleichen gebildet sein.

Die Ableitungsanordnung 7 ist dazu vorgesehen oder ausgebildet, den vom zu fördernden Gut, nämlich dem zu entstaubenden Raufutter 2, abgetrennten Staubanteil gesondert abzuleiten oder abzuführen. Dazu umfasst die Ableitungsanordnung 7 einen zwischen dem Separierelement 5 und der Innenfläche 10 des Gehäuses 4 ausgebildeten Aufnahmeraum 13 und zumindest eine aus dem Aufnahmeraum 13 hinausführende Staubableitung 14. Bei der Staubableitung 14 handelt es sich um eine körperliche Rohrleitung, welche mit dem Aufnahmeraum 13 in Strömungsverbindung steht.

Zur Bildung des Aufnahmeraums 13 ist das Separierelement 5 im Querschnitt gesehen von der Innenfläche 10 des Gehäuses 4 beabstandet angeordnet. Weiters erstreckt sich der Aufnahmeraum 13 bevorzugt ebenfalls durchgängig zwischen den beiden Endbereichen 8, 9. Weiters kann es vorteilhaft sein, wenn der zwischen der Innenfläche 10 des Gehäuses 4 und dem Separierelement 5 befindliche oder ausgebildete Aufnahmeraum 13 gegenüber der äußeren Umgebung abgeschlossen ist, insbesondere abgedichtet ausgebildet ist.

Weiters ist bei diesem Ausführungsbeispiel gezeigt, dass das Gehäuse 4 der Vorrichtung 1 ausgehend von seinem ersten Endbereich 8 hin zu seinem zweiten Endbereich 9 ansteigend angeordnet ist. Damit erfolgt die Förderung des Raufutters 2 entgegen die Schwerkraft nach oben. In diesem Fall ist dann die aus dem Aufnahmeraum 13 hinausführende Staubableitung 14 im ersten Endbereich 8 des Gehäuses 4 angeordnet. Je nach Staubart kann der abgetrennte Staub 3 durch die Schwerkraft und den in Richtung auf den ersten Endbereich 8 abfallend ausgebildeten Aufnahmeraum 13 selbstständig hin zur Staubableitung 14 gelangen. Der Staub 3 kann anschließend in einem nicht näher dargestellten Aufnahmegefäß aufgenommen und zwischengespeichert werden.

Unabhängig davon oder zusätzlich dazu wäre aber auch das Vorsehen einer eigenen Absaugvorrichtung 15 denkbar oder vorteilhaft. Die Absaugvorrichtung 15 ist zumeist Bestandteil der Ableitungsanordnung 7 und nur schematisch dargestellt. Der mittels der Absaugvorrichtung 15 aus dem Aufnahmeraum 13 abgesaugte Staub 3 kann z.B. in einem Staubsack oder einem anderen Aufnahmegefäß aufgenommen und zwischengespeichert werden.

Die Vorrichtung 1 kann weiters noch eine Aufgabeeinheit 16 umfassen, um in dieser das Raufutter 2 mitsamt dem darin enthaltenen Staub 3 der Vorrichtung 1 zuführen oder aufgeben zu können. Die Aufgabeeinheit 16 ist im Bereich des ersten Endbereichs 8 des Gehäuses 4 angeordnet. Bevorzugt ist die Aufgabeeinheit 16 anschließend an der vom zweiten Endbereich 9 abgewendeten Seite des Gehäuses 4 daran anschließend angeordnet. Die Aufgabeeinheit 16 kann ihrerseits einen Aufgabetrichter 17 und ein an das Separierelement 5 daran anschließendes Verbindungselement 18 umfassen. Die beiden Querschnitte können bevorzugt gleich zueinander ausgebildet werden, um einen stufenlosen Übergang zwischen dem Separierelement 5 und dem Verbindungselement 18 auszubilden. Dann erstreckt sich der Fördermechanismus 6 in das Verbindungselement 18 der Aufgabeeinheit 16, insbesondere in das Verbindungselement 18, hinein.

Der besseren Übersichtlichkeit halber wurde auf die Darstellung von Antriebselementen, insbesondere für den Fördermechanismus 6, die Absaugvorrichtung 15 und die Aufgabeeinheit 16 verzichtet. Die Aufgabeeinheit 16 kann auch noch eine vereinfacht angedeutete Auftrennanordnung 19 für das Auftrennen und/oder Lockern des Raufutters 2 aufweisen.

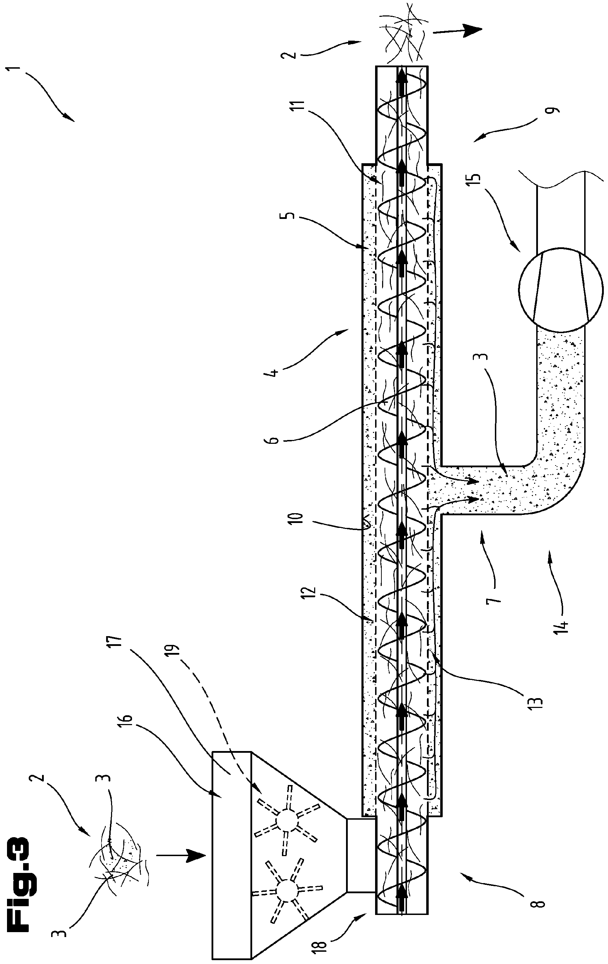

In der Fig. 3 ist eine weitere und gegebenenfalls für sich eigenständige Ausführungsform der Vorrichtung 1 zum Entstauben von Raufutter 2 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Der grundsätzliche Aufbau der Vorrichtung 1 mit deren Bauteilkomponenten entspricht jenem, wie dieser bereits in den Fig. 1 und 2 detailliert beschrieben worden ist. Es werden nachfolgend nur die Unterschiede zu diesem Ausführungsbeispiel beschrieben.

Es ist bei diesem Ausführungsbeispiel die Ausrichtung des Gehäuses 4 in seiner Raumrichtung unterschiedlich zu jenem in der Fig. 1 gezeigten Ausführungsbeispiel gewählt. Es ist nämlich vorgesehen, dass das Gehäuse 4 ausgehend von seinem ersten Endbereich 8 hin zu seinem zweiten Endbereich 9 eine horizontale Ausrichtung aufweist. Dabei hat es sich dann als vorteilhaft erwiesen, wenn die aus dem Aufnahmeraum 13 hinausführende Staubableitung 14 in einem Mittelabschnitt zwischen dem ersten Endbereich 8 und dem zweiten Endbereich 9 des Gehäuses 4 angeordnet ist.

Weiters soll bei dieser Anordnung die zuvor beschriebene Absaugvorrichtung 15 vorgesehen werden, um den Staub 3 aus dem im Hohlraum 11 befindlichen Aufnahmeraum 13 absaugen und somit getrennt vom Raufutter 2 abführen zu können.

Die Vorrichtung 1 kann bevorzugt zur Durchführung des Verfahrens, nämlich dem Trennverfahren des Raufutters 2 von dem darin enthaltenen oder befindlichen Staub 3 Verwendung finden. Es werden bei diesem Verfahren folgende Schritte durchgeführt
- Bereitstellen des rohrförmig oder trogförmig ausgebildeten Gehäuses 4, welches Gehäuse 4 den ersten Endbereich 8 und den in Richtung seiner Längserstreckung davon beabstandet angeordneten zweiten Endbereich 9 aufweist und von seiner Innenfläche 10 der sich zwischen den beiden Endbereichen 8, 9 erstreckende Hohlraum 11 definiert wird,
- Bereitstellen des Separierelements 5, welches Separierelement 5 im Hohlraum 11 aufgenommen ist und in seiner Längserstreckung eine Vielzahl an über die Oberfläche verteilt angeordnete Durchbrüche 12 aufweist, und das Separierelement 5 sich zumindest zwischen den beiden Endbereichen 8 des Gehäuses 4 erstreckt,
- Bereitstellen des Fördermechanismus 6, welcher Fördermechanismus 6 ebenfalls im Hohlraum 11 aufgenommen ist,
- Bereitstellen der Ableitungsanordnung 7, wobei von der Ableitungsanordnung 7 der zwischen dem Separierelement 5 und der Innenfläche 10 des Gehäuses 4 ausgebildete Aufnahmeraum 13 und zumindest die aus dem Aufnahmeraum 13 hinausführende Staubableitung 14 gebildet wird,
- Zuführen des zu entstaubenden Raufutters 2 samt dem Staub 3 in den vom Gehäuse 4 definierten Hohlraum 11 und Entlangfördern des Raufutters 2 entlang des Separierelements 5 zumindest vom ersten Endbereich 8 hin zum zweiten Endbereich 9 mittels des Fördermechanismus 6 und dabei Abtrennen des Staubs 3 vom Raufutter 2 durch die im Separierelement 5 befindlichen Durchbrüche 12 hindurch in den Aufnahmeraum 13.

Das Entfernen oder getrennte Abtransportieren des Staubs 3 kann mittels der zuvor beschriebenen Absaugvorrichtung 15 durchgeführt werden.

Abschließend sei noch erwähnt, dass die einzelnen Verfahrensschritte und deren zeitliche Abfolge nicht zwingend in der angeführten Reihenfolge erfolgen muss, sondern auch eine davon abweichende zeitliche Abfolge möglich ist. Bevorzugt erfolgt jedoch eine sukzessive und somit aufeinander folgende zeitliche Abfolge der angeführten Verfahrensschritte in der angegebenen Reihenfolge.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Raufutter
- 3: Staub
- 4: Gehäuse
- 5: Separierelement
- 6: Fördermechanismus
- 7: Ableitungsanordnung
- 8: erster Endbereich
- 9: zweiter Endbereich
- 10: Innenfläche
- 11: Hohlraum
- 12: Durchbruch
- 13: Aufnahmeraum
- 14: Staubableitung
- 15: Absaugvorrichtung
- 16: Aufgabeeinheit
- 17: Aufgabetrichter
- 18: Verbindungselement
- 19: Auftrennanordnung

## Patentansprüche

1. Vorrichtung (1) zum Trennen von Raufutter (2) von darin befindlichem Staub (3) umfassend
- ein rohrförmig oder trogförmig ausgebildetes Gehäuse (4), welches Gehäuse (4) einen ersten Endbereich (8) und in Richtung seiner Längserstreckung davon beabstandet einen zweiten Endbereich (9) aufweist und mit seiner Innenfläche (10) einen sich zwischen den beiden Endbereichen (8, 9) erstreckenden Hohlraum (11) definiert,
- ein Separierelement (5), welches Separierelement (5) im Hohlraum (11) aufgenommen ist und in seiner Längserstreckung eine Vielzahl an über die Oberfläche verteilt angeordnete Durchbrüche (12) aufweist, und das Separierelement (5) sich zumindest zwischen den beiden Endbereichen (8, 9) des Gehäuses (4) erstreckt,
- einen Fördermechanismus (6), welcher Fördermechanismus (6) ebenfalls im Hohlraum (11) aufgenommen ist und dazu ausgebildet ist, das zu entstaubende Raufutter (2) samt dem darin befindlichen Staub (3) entlang des Separierelements (5) zumindest vom ersten Endbereich (8) hin zum zweiten Endbereich (9) zu fördern, und
- eine Ableitungsanordnung (7), welche Ableitungsanordnung (7) einen zwischen dem Separierelement (5) und der Innenfläche (10) des Gehäuses (4) ausgebildeten Aufnahmeraum (13) und zumindest eine aus dem Aufnahmeraum (13) hinausführende Staubableitung (14) aufweist.

2. Vorrichtung (1) nach Anspruch 1, **dadurch gekennzeichnet, dass** der zwischen der Innenfläche (10) des Gehäuses (4) und dem Separierelement (5) befindliche Aufnahmeraum (13) gegenüber der äußeren Umgebung abgeschlossen ist, insbesondere abgedichtet ausgebildet ist.

3. Vorrichtung (1) nach Anspruch 1 oder 2, **dadurch gekennzeichnet, dass** das Separierelement (5) durch ein Sieb, ein Lochblech, ein Gitter, ein Maschengeflecht gebildet ist.

4. Vorrichtung (1) nach einem der vorhergehenden Ansprüche, **dadurch gekennzeichnet, dass** das Separierelement (5) rohrförmig oder trogförmig ausgebildet ist.

5. Vorrichtung (1) nach Anspruch 4, **dadurch gekennzeichnet, dass** das rohrförmig oder trogförmig ausgebildete Separierelement (5) von der Innenfläche (10) des Gehäuses (4) in radialer Richtung beabstandet, insbesondere umfänglich durchgängig radial beabstandet, angeordnet ist.

6. Vorrichtung (1) nach einem der vorhergehenden Ansprüche, **dadurch gekennzeichnet, dass** eine Aufgabeeinheit (16) für das zu entstaubende Raufutter vorgesehen ist, welche Aufgabeeinheit (16) im Bereich des ersten Endbereichs (8) oder entlang eines Abschnitts des Gehäuses (4), insbesondere entlang des gesamten Gehäuses (4) angeordnet ist.

7. Vorrichtung (1) nach Anspruch 6, **dadurch gekennzeichnet, dass** die Aufgabeeinheit (16) anschließend an der vom zweiten Endbereich (9) abgewendeten Seite des Gehäuses (4) angeordnet ist.

8. Vorrichtung (1) nach Anspruch 6 oder 7, **dadurch gekennzeichnet, dass** die Aufgabeeinheit (16) einen Aufgabetrichter (17) und ein an das Separierelement (5) daran anschließendes Verbindungselement (18) umfasst.

9. Vorrichtung (1) nach einem der vorhergehenden Ansprüche, **dadurch gekennzeichnet, dass** sich der Fördermechanismus (6) in das Verbindungselement (18) der Aufgabeeinheit (16) hinein erstreckt.

10. Vorrichtung (1) nach einem der vorhergehenden Ansprüche, **dadurch gekennzeichnet, dass** der Fördermechanismus (6) durch eine Förderschnecke, eine Förderkette, ein Förderband gebildet ist.

11. Vorrichtung (1) nach einem der vorhergehenden Ansprüche, **dadurch gekennzeichnet, dass** die Ableitungsanordnung (7) eine Absaugvorrichtung (15) umfasst, welche Absaugvorrichtung (15) dazu ausgebildet ist, den im Aufnahmeraum (13) befindlichen Staub (3) via die Staubableitung (14) abzusaugen.

12. Vorrichtung (1) nach einem der vorhergehenden Ansprüche, **dadurch gekennzeichnet, dass** das Gehäuse (4) ausgehend von seinem ersten Endbereich (8) hin zu seinem zweiten Endbereich (9) ansteigend angeordnet ist.

13. Vorrichtung (1) nach Anspruch 12, **dadurch gekennzeichnet, dass** die aus dem Aufnahmeraum (13) hinausführende Staubableitung (14) im ersten Endbereich (8) des Gehäuses (4) angeordnet ist.

14. Vorrichtung (1) nach einem der Ansprüche 1 bis 11, **dadurch gekennzeichnet, dass** das Gehäuse (4) ausgehend von seinem ersten Endbereich (8) hin zu seinem zweiten Endbereich (9) eine horizontale Ausrichtung aufweist.

15. Vorrichtung (1) nach Anspruch 14, **dadurch gekennzeichnet, dass** die aus dem Aufnahmeraum (13) hinausführende Staubableitung (14) in einem Mittelabschnitt zwischen dem ersten Endbereich (8) und dem zweiten Endbereich (9) des Gehäuses (4) angeordnet ist.

16. Verfahren zum Trennen von Raufutter (2) von dem darin mit enthaltenen Staub (3), insbesondere unter Verwendung der Vorrichtung (1) nach einem der vorhergehenden Ansprüche, bei dem folgende Schritte durchgeführt werden
- Bereitstellen eines rohrförmig oder trogförmig ausgebildeten Gehäuses (4), welches Gehäuse (4) einen ersten Endbereich (8) und in Richtung seiner Längserstreckung davon beabstandet einen zweiten Endbereich (9) aufweist und von seiner Innenfläche (10) ein sich zwischen den beiden Endbereichen (8) erstreckenden Hohlraum (11) definiert wird,
- Bereitstellen eines Separierelements (5), welches Separierelement (5) im Hohlraum (11) aufgenommen ist und in seiner Längserstreckung eine Vielzahl an über die Oberfläche verteilt angeordnete Durchbrüche (12) aufweist, und das Separierelement (5) sich zumindest zwischen den beiden Endbereichen (8, 9) des Gehäuses (4) erstreckt,
- Bereitstellen eines Fördermechanismus (6), welcher Fördermechanismus (6) ebenfalls im Hohlraum (11) aufgenommen ist,
- Bereitstellen einer Ableitungsanordnung (7), wobei von der Ableitungsanordnung (7) ein zwischen dem Separierelement (5) und der Innenfläche (10) des Gehäuses (4) ausgebildeter Aufnahmeraum (13) und zumindest eine aus dem Aufnahmeraum (13) hinausführende Staubableitung (14) gebildet wird, und
- Zuführen des zu entstaubenden Raufutters (2) samt dem Staub (3) in den vom Gehäuse (4) definierten Hohlraum (11) und Entlangfördern des Raufutters (2) entlang des Separierelements (5) zumindest vom ersten Endbereich (8) hin zum zweiten Endbereich (9) mittels des Fördermechanismus (6) und dabei Abtrennen des Staubs (3) vom Raufutter (2) durch die im Separierelement (5) befindlichen Durchbrüche (12) hindurch in den Aufnahmeraum (13).

17. Verfahren nach Anspruch 16, **dadurch gekennzeichnet, dass** mittels einer Absaugvorrichtung (15) der im Aufnahmeraum (13) befindliche Staub (3) abgesaugt wird.
